# EUROPÄISCHE PATENTSCHRIFT

(11) **EP 1 614 798 B1**
(45) Veröffentlichungstag und Bekanntmachung des Hinweises auf die Patenterteilung: **14.11.2007**
(21) Anmeldenummer: 05008699.0
(22) Anmeldetag: 21.04.2005
(51) Int. Cl.: D21F 1/70, D21B 1/32

(54) **Verfahren zur Flotation von Störstoffen aus einer wässrigen Faserstoffsuspension**
Process for removing impurities from an aqueous fibrous suspension by flotation
Procédé pour séparer par flottation des impuretés d'une suspension aqueuse de fibres

(30) Priorität: 06.07.2004 DE 102004032601
(43) Veröffentlichungstag der Anmeldung: 11.01.2006
(73) Patentinhaber: Voith Patent GmbH, 89522 Heidenheim (DE)
(72) Erfinder: Hess, Harald, 88287 Grünkraut (DE); Dreyer, Axel, 88212 Ravensburg (DE); Kemper, Martin, 88250 Weingarten (DE); Britz, Herbert, 88250 Weingarten (DE); Selbherr, Anton, 78315 Radolfzell (DE); Moeller, Dietrich, 88371 Ebersbach (DE)

(56) Entgegenhaltungen:
- EP-A- 1 416 086
- DE-A- 10 250 762
- DE-A- 19 845 536
- US-A- 6 082 549

## Beschreibung

Die Erfindung betrifft ein Verfahren zur Flotation von Störstoffen aus einer wässrigen Faserstoffsuspension gemäß dem Oberbegriff des Anspruchs 1. Solches Verfahren ist aus der DE 198 45 536 A1 bekannt.

Verfahren der genannten Art werden verwendet, um aus einer wässrigen Faserstoffsuspension zumindest einen Teil der darin suspendierten Störstoffteilchen auszuscheiden. Bekanntlich wird bei einer Flotation ein die auszuscheidenden Stoffe enthaltender Schaum oder Schwimmschlamm gebildet. Ein typischer Anwendungsfall eines derartigen Verfahrens ist die Aufbereitung von einer aus bedrucktem Altpapier gewonnenen wässrigen Faserstoffsuspension, in der die Druckfarbenpartikel bereits von Fasern abgelöst sind, so dass sie sich ausflotieren lassen. Der hier beschriebene Flotationsvorgang nutzt die Unterschiede zwischen Faserstoff und unerwünschten Feststoffteilchen in der Art, dass der Faserstoff auf Grund seiner Hydrophilie in der Faserstoffsuspension verbleibt, während die angesprochenen Feststoffteilchen hydrophob sind und deshalb zusammen mit den Luftblasen in den Schaum gelangen. Neben den Druckfarbenpartikeln gibt es auch eine Vielzahl weiterer Stoffe, die hydrophob sind und sich daher durch Flotation von dem Faserstoff trennen lassen. Solche Stoffe sind insbesondere Kleber, feine Kunststoffpartikel und eventuell auch Harze. Wenn durch das Flotationsverfahren Fasern von Verunreinigungen getrennt, also nicht alle Feststoffpartikel aussortiert werden sollen, spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Faserstoffsuspensionen verwendet.

Der Stand der Technik bezüglich Flotationsverfahren für Faserstoffsuspensionen ist bereits sehr weit fortgeschritten. Daher gibt es Lösungen, welche durchaus geeignet sind, einen großen Teil der Feststoffpartikel durch Flotation zu entfernen. Da Flotationsanlagen relativ aufwändig in der Beschaffung und im Betrieb sind, ist es ein verständliches Ziel, deren Effekt zu verbessern oder den notwendigen Aufwand für das Erreichen desselben Ergebnisses zu reduzieren.

Im Zuge der laufenden Entwicklung von Verfahren und Apparaten zur Flotation von Faserstoffsuspensionen ist insbesondere die Führung von Suspension und Luftblasen im Flotationsbehälter variiert worden. Das hier betrachtete Strömungsprinzip ist dabei die Querstromführung, d.h. durch hydraulische Maßnahmen wird die Faserstoffsuspension im Wesentlichen quer zur Strömungsrichtung der gegen das Schwerefeld aufsteigenden Luftblasen geführt. Im weitaus häufigsten Fall, bei dem die treibende Kraft der Flotation die Erdgravitation ist, bedeutet das also: Die Luftblasen steigen nach oben, und die Faserstoffsuspension wird im Wesentlichen waagerecht geführt.

Verfahren dieser Art werden bereits in weitem Umfang industriell angewendet. D.h. bei der zur Papiererzeugung notwendigen Stoffaufbereitung werden Anlagen betrieben, die dieses Verfahren verwenden und große Prodüktionsmengen zu verarbeiten haben. Der erwartete und heute auch mögliche optimale Effekt solcher Verfahren hängt entscheidend von den Strömungsgeschwindigkeiten ab, die sich in den verwendeten Flotationsgefäßen einstellen. Infolge dessen ist bei Neuanlagen eine Anpassung von Behältervolumina, Querschnitten, Rohrleitungen etc. an die gewünschte Produktionsmenge erforderlich. Wenn diese Anpassung ohne technologische Nachteile gelingt, ist zwar der Effekt gesichert, es entstehen aber größere Kosten durch ständige Neukonstruktionen und Änderungen in der Fertigung solcher Vorrichtungen.

Der Erfindung liegt die Aufgabe zu Grunde, Flotationsverfahren dieser Art weiter zu verbessern. Reinigungsergebnis und/oder die Ausbeute des Verfahrens sollen auch bei unterschiedlichen Produktionsmengen möglichst leicht optimiert werden können.

Diese Aufgabe wird durch die Merkmale des Anspruchs 1 in vollem Umfang gelöst.

Durch die beschriebenen Merkmale ist es möglich, eine gleichmäßige Strömung im Flotationsgefäß zu erzeugen, da auf Grund des gewählten Längen/Breitenverhältnisses störende Turbulenzen weitgehend vermieden werden, sich also die Ströme von Suspension und Blasenstrom in optimaler Weise ausbilden können. Darüber hinaus bietet sich noch der Vorteil, dass sich die gesamte Flotationsanlage leicht aus Modulen aufbauen lässt, womit die einzelnen Flotationsgefäße gemeint sind. Diese Module werden in einfacher Weise an ihren Längsseiten zusammen montiert. Bei dieser Ausgestaltung des Verfahrens werden diejenigen Module, mit denen ein Flotationsschritt (z.B. Primär- oder Sekundärflotation) durchgeführt werden soll, parallel betrieben. Bei größeren Durchsätzen in einer Stufe werden entsprechend mehr, bzw. bei kleineren entsprechend weniger Module verwendet. Neue aufwändige Optimierungsversuche sind dann nicht mehr erforderlich.

Das erfindungsgemäße Verfahren kann angewendet werden auf alle im Oberbegriff beschriebenen Formen. Dabei kann die zu flotierende Faserstoffsuspension z.B. von der Seite in die sich im Flotätionsgefäß befindende Flüssigkeit zugegeben werden, wo sie auf den aufsteigenden Blasenstrom trifft.

Die Erfindung und ihre Vorteile werden erläutert an Hand von Zeichnungen. Dabei zeigen:
- Fig. 1: schematisch: Durchführung des Verfahrens;
- Fig. 2: Blick auf eine für das Verfahren geeignete Flotationsanlage;
- Fig. 3: ein Schaltungsbeispiel von zwei Modulgruppen;
- Fig. 4: eine Variante des Verfahrens;
- Fig. 5: eine Ausführung des Verfahrens mit Schaumrezirkulation.

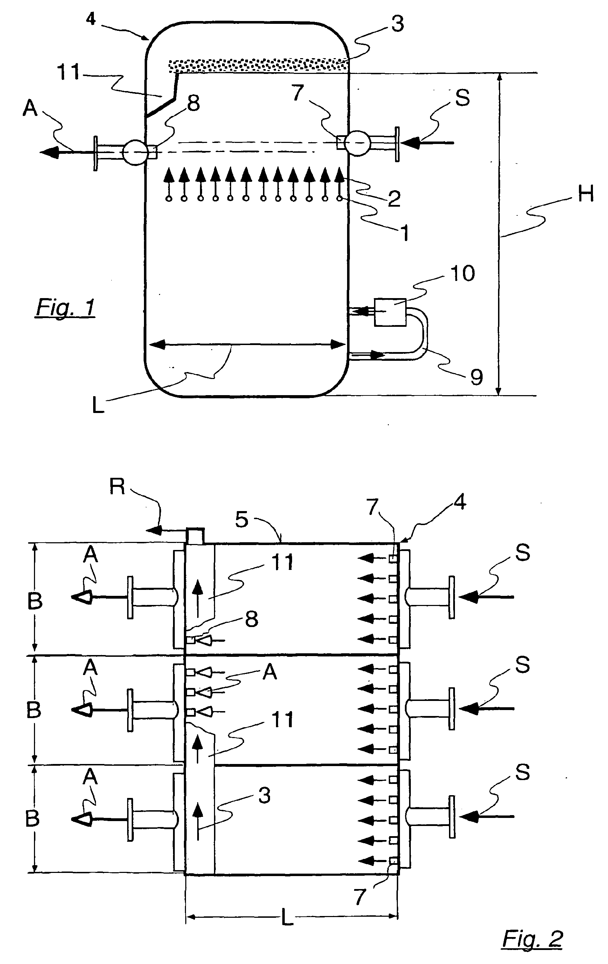

Das in der Fig. 1 gezeigte Flotationsgefäß 4 ist in geschnittener Seitenansicht dargestellt. Die Faserstoffsuspension S wird durch mindestens eine oben liegende Verteilöffnung 7 in die sich im Flotationsgefäß 4 bereits befindende Faserstoffsuspension zugegeben. Dabei ist eine gleichmäßige Verteilung über die Breite gesehen besonders vorteilhaft. Nur sporadisch gezeichnete Gasblasen 1 bilden einen Blasenstrom 2. Die zugegebene Faserstoffsuspension S wird nun quer zur Steigrichtung des Blasenstromes 2 geführt und in gereinigter Form als Gutstoff S' durch mindestens einen Gutstoffauslass 8 aus dem Flotationsgefäß 4 ausgeleitet. Dabei bleibt der Strömungsquerschnitt im Wesentlichen gleich. Die enthaltenen Störstoffe werden in an sich bekannter Weise an die Gasblasen 1 angelagert und in einen verdichteten Flotationsschaum 3 nach oben abgeführt. Der Schaum wird im Flotationsgefäß 4 an einer Schaumrinne 11 angestaut, welche im Allgemeinen ein einstellbares Überlaufwehr aufweist, gesammelt und als Rejekt R abgeführt. Die Suspension im Flotationsgefäß 4 unterhalb des Flotationsschaumes 3 hat die Stauhöhe H. Die Begasung der Suspension wird bei dem hier gezeigten Beispiel durch einen Begasungskreislauf 9 durchgeführt, dessen Funktion darin besteht, einen Teil der Faserstoffsuspension abzuziehen, in einem Begasungselement 10 mit Gas zu vermischen und dann an etwas tieferer Stelle (es könnte auch eine höhere Stelle sein) in das Flotationsgefäß 4 wieder zurück zu pumpen. Aus der Fig. 2, welche insgesamt drei Flotationsgefäße 4 geschnitten und in Ansicht von oben schematisch darstellt, erkennt man die Längsseite 5 mit Länge L und die Breitseite 6 mit Breite B. Das Verhältnis der Länge zur Breite ist bei der Durchführung der Erfindung von entscheidender Bedeutung. Es sollte mindestens 1,5 betragen, wobei besonders gute Flotationsergebnisse bei einem Verhältnis von mehr als mindestens 3 erzielbar sind. Die Vielzahl von Verteilöffnungen 7 dient dazu, die ankommende Faserstoffsuspension S gleichmäßig auf den Strömungsquerschnitt zu verteilen. Sie sind vorzugsweise mit Löchern versehen, können aber auch durch andere Verteilsysteme, z.B. mit einem Breitschlitz ersetzt werden. Auch beim Gutstoff ist ein über die Breite gesehen gleichmäßiger Abfluss von Vorteil.

Bekanntlich lässt sich bei vorgegebener Strömungsquerschnittsfläche durch Variation des Länge-/Breiteverhältnisses der hydraulische Durchmesser variieren. Der hydraulische Durchmesser rechnet sich nach der Formel: Vierfache Querschnittsfläche geteilt durch den benetzten Umfang. Er ist bei kreisrunden Querschnitten am größten und kann durch die in den Ansprüchen beschriebenen Maßnahmen wesentlich verkleinert werden. Dadurch wird die Suspensionsströmung im Flotationsgefäß beruhigt und die Wirksamkeit des Verfahrens verbessert. Am Beispiel einer Strömungsquerschnittsfläche von 4 m² beträgt beim - bisher üblichen - Kreisquerschnitt der hydraulische Durchmesser ca. 2,3 m. Wird dagegen ein Rechteck mit L = 4 m und B=1 m gewählt, liegt er bei 1,6 m. Wählt man aus ökonomischen Gründen eine größere Strömungsquerschnittsfläche von 8 m², so ist der hydraulische Durchmesser beim Kreis 3,19 m und beim Rechteck mit L = 4 m und B = 2 m nur 2,67 m.

In vielen Fällen lässt sich ein weiterer Vorteil realisieren, da durch die Ausgestaltung des Strömungsquerschnittes nicht nur die hydraulischen Verhältnisse im Flotationsgefäß 4 entscheidend verbessert werden, sondern dass sich auch eine einfache Möglichkeit zum modularen Aufbau der ganzen Flotationsanlage ergibt. Infolge der vollständig oder zumindest größtenteils geraden seitlichen Begrenzung der Flotationszelle können Module nebeneinander montiert werden, indem sie sich an den Längsseiten berühren. Die gelegentlich bei eckigen Behältern auftretenden Probleme des Ausbeulens treten dann an den Berührungsflächen nicht auf. Die Wände müssen zwischen den Modulen nicht unbedingt durchgehend sein, sie können auch Öffnungen aufweisen, z.B. im Bodenbereich des Flotationsgefäßes 4. Sie können auch ganz fehlen, wenn sich ohne sie in den Modulen eine gleichmäßige Strömung ausbildet.

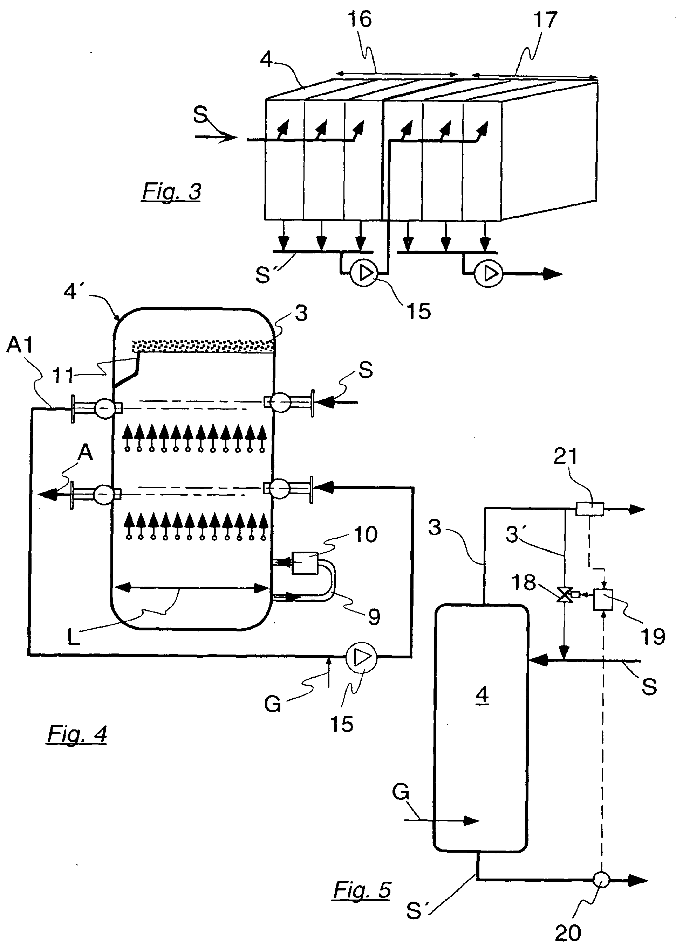

Eine mögliche Mischung von Parallel- und Serienschaltungen zeigt die Fig. 3 in schematischer Form. Gemäß diesem Beispiel werden jeweils drei Module von Flotationsgefäßen parallel betrieben, d.h. dass in der ersten Gruppe 16 drei Flotationszellen mit der gleichen Faserstoffsuspension S versorgt werden. Der durch Flotation gebildete Gutstoff S' dieser drei Module wird zusammengefasst und über eine Pumpe 15 der zweiten Gruppe 17 von wiederum drei Modulen zugeführt. Dabei kann die Pumpe 15 auch zur erneuten Begasung des Gutstoffs-S' benutzt werden. Auch bei solchen Anlagen wirken sich die Vorteile der Erfindung aus. Dabei ist das in Fig. 3 gezeigte Verfahren nur als Beispiel zu verstehen. Es wäre auch möglich, bei zweistufiger Fahrweise, bei der also der Rejekt (Schaum) der ersten Stufe in den Zulauf der zweiten Stufe geführt wird, eine einzige aus Modulen zusammengesetzte Anlage zu verwenden.

Wie in Fig. 4 dargestellt, ist es auch möglich, die bisher beschriebene Querströmung in einem Flotationsgefäß 4' mehrmals übereinander durchzuführen. Zweckmäßigerweise wird die zu flotierende Suspension S im oberen Bereich des Flotationsgefäßes 4' zugegeben. Der dann im Querstrom gebildete erste Gutstoff A1 wird aus dem Flotationsgefäß 4' abgezogen und gelangt z.B. über eine Pumpe 15 wieder in das Flotationsgefäß 4' zurück. In der Pumpe 15 kann durch Zugaben von Gas G erneut belüftet werden. Dabei ist mit Vorteil die Zuführstelle des so gebildeten ersten Gutstoffs A1 geodätisch unterhalb der Stelle, an dem die Faserstoffsuspension S eingeführt wird. Auf diese Weise wird im gesamthaft betrachteten Flotationsgefäß 4' eine Gegenströmung erzeugt, was den Vorteil hat, dass die "schmutzigste" Suspension mit den bereits sehr stark beladenen Luftblasen in Kontakt kommt und auf dem Weg nach unten ständig sauberer wird, wobei auch die dann angetroffenen Luftblasen weniger Schmutzfracht tragen. Bei diesem Gegenstromprinzip ist es wichtig, dass die Geschwindigkeiten optimal aufeinander abgestimmt werden, um eine möglichst gute Flotationswirkung zu erhalten. Auch wenn hier die Rückführung von bereits flotiertem Gutstoff nur einmal dargestellt ist, kann sie durchaus mehrmals erfolgen.

Ein einfaches Beispiel für die Gegenstromflotation ist in Abbildung 4 des Fachaufsatzes "Neue Systembausteine zur Aufbereitung von Altpapier: Entwicklung und Betriebserfahrungen", J. Kleuser und T.H. Egenes, Wochenblatt für Papierfabrikation 14/15, 1996, dargestellt. Dort findet der Stoffzulauf im oberen Drittel eines runden Flotationsapparates statt, während die Begasung im unteren Teil unmittelbar über dem unten liegenden Gutstoffabzug erfolgt. Der Schaum wird im obersten Teil der Flotationssäule gesammelt und abgeführt. Eine andere Möglichkeit ist z.B. aus der DE 198 23 053 bekannt. Dabei erfolgt die Zugabe der Faserstoffsuspension in den bereits gebildeten Schaum. Auch hier werden Luftblasen und Suspension im Gegenstrom geführt.

In vielen Fällen wird das Verfahren so durchgeführt, dass in einer Stufe nur ein einziger Durchlauf durch ein Flotationsgefäß erfolgt. Mehrere Flotationsgefäße einer Flotationsstufe sind dann nicht in Reihe, sondern parallel geschaltet, so dass der anfallende Flotationsschaum 3 praktisch überall die gleiche Qualität hat. Mit Vorteil kann ein Teilstrom 3' dieses Schaumes in den Zulauf zum Flotationsgefäß 4 rezirkuliert werden, was in der Fig. 5 schematisch (Seitenansicht) dargestellt ist. Dabei dickt sich der nicht rezirkulierte Flotationsschaum ein, was die Rejekt-Aufbereitung und - Deponie wesentlich erleichtert. Die Menge des rezirkulierten Teilstromes 3' kann zur Optimierung, des Verfahrens so eingestellt werden, dass bei der geforderten Qualität der Stoffverlust minimal ist. Dazu wird hier das Signal (z.B. der Weißgrad) eines Qualitätssensors 20 im abfließenden Gutstoff S' an einen Regler 19 übermittelt, der über ein Stellventil 18 den Teilstrom 3' verändert. Eine Alternative dazu ist die Regelung der Schaummenge mit Hilfe eines Durchflussmessers 21, kombiniert mit Konsistenzmessung des Schaumes, bei der wiederum das Stellventil 18 angesteuert wird.

## Patentansprüche

1. Verfahren zur Entfernung von Störstoffen aus einer wässrigen Fäserstoffsuspension (S) unter Verwendung eines aufrecht stehenden Flotationsgefäßes (4; 4'), in dem die Faserstoffsuspension (S) in einer Stauhöhe (H) über dem Boden des Flotationsgefäßes (4) aufgestaut wird,
bei dem mit Hilfe von Gasblasen (1) ein in der aufgestauten Faserstoffsuspension (S) gegen das Schwerefeld aufsteigender Blasenstrom (2) gebildet wird,
wobei die Faserstoffsuspension (S) quer zum Blasenstrom (2) geführt und in gereinigter Form als Gutstoff (S') abgeführt wird und
wobei die Störstoffe an die Gasblasen (1) angelagert und danach zusammen mit den Gasblasen (1) in einem verdichteten Flotationsschaum (3) abgeführt werden;
**dadurch gekennzeichnet,**
**dass** der quer zum Blasenstrom (2) liegende Strömungsquerschnitt des Flotationsgefäßes (4, 4') an mindestens einer Längsseite (5) zu mindestens 80 % geradlinig ist und dass die Länge (L) der Längsseite (5) mindestens 1,5 Mal, vorzugsweise mindestens 2 Mal, so groß wie die Breite (B) der Breitseite (6) ist.

2. Verfahren nach Anspruch 1,
**dadurch gekennzeichnet,**
**dass** die Länge (L) mindestens 3 Mal so groß ist wie die Breite (B).

3. Verfahren nach Anspruch 1 oder 2,
**dadurch gekennzeichnet,**
**dass** der Strömungsquerschnitt im Wesentlichen rechteckig ist.

4. Verfahren nach Anspruch 1, 2 oder 3,
**dadurch gekennzeichnet,**
**dass** der hydraulische Durchmesser des Strömungsquerschnittes nicht größer ist als 2,7 m.

5. Verfahren nach Anspruch 1, 2, 3 oder 4,
**dadurch gekennzeichnet,**
**dass** die zu flotierende Faserstoffsuspension (S) zumindest auf einem Teil ihres Weges im Flotationsgefäß (4, 4') durch den Blasenstrom (2) hindurchgeführt wird.

6. Verfahren nach einem der voranstehenden Ansprüche,
**dadurch gekennzeichnet,**
**dass** die Faserstoffsuspension (S) gleichmäßig über mindestens 80 % des Strömungsquerschnittes verteilt in das Flotationsgefäß (4, 4') zugeführt wird.

7. Verfahren nach einem der voranstehenden Ansprüche,
**dadurch gekennzeichnet,**
**dass** mindestens zwei gleich große Flotationsgefäße (4, 4') verwendet werden, die sich an ihrer Längsseite (5) berühren, und dass sie parallel geschaltet sind.

8. Verfahren nach einem der voranstehenden Ansprüche,
**dadurch gekennzeichnet,**
**dass** eine Flotationsanlage verwendet wird, die überwiegend aus gleich großen Flotationsgefäßen (4, 4') besteht.

9. Verfahren nach Anspruch 7 oder 8,
**dadurch gekennzeichnet,**
**dass** die Flotationsgefäße (4, 4') an den berührenden Längsseiten (5) offen ausgeführt sind.

10. Verfahren nach einem der voranstehenden Ansprüche,
**dadurch gekennzeichnet,**
**dass** die zu flotierende Faserstoffsuspension (S) seitlich in den aufsteigenden Blasenstrom (2) zugegeben wird.

11. Verfahren nach einem der voranstehenden Ansprüche,
**dadurch gekennzeichnet,**
**dass** die zu flotierende Faserstoffsuspension (S) unbelüftet zugegeben wird, und dass unterhalb der Zugabestelle eine Belüftung erfolgt.

12. Verfahren nach einem der Ansprüche 1 bis 10,
**dadurch gekennzeichnet,**
**dass** die zu flotierende Faserstoffsuspension (S) belüftet zugegeben wird, und dass geodätisch unterhalb der Zugabestelle eine Teilbelüftung erfolgt.

13. Verfahren nach einem der voranstehenden Ansprüche,
**dadurch gekennzeichnet,**
**dass** die Stelle, bei der die Suspension in das Flotationsgefäß (4, 4') eingeführt wird, geodätisch oberhalb des Abzugs des Gutstoffes (S') liegt.

14. Verfahren nach einem der voranstehenden Ansprüche,
**dadurch gekennzeichnet,**
**dass** die Menge der zugeführten Luft einstellbar ist.

15. Verfahren nach einem der voranstehenden Ansprüche,
**dadurch gekennzeichnet,**
**dass** ein Teilstrom (3') des Flotationsschaumes (3) in den Zulauf des Flotationsgefäßes (4, 4') zurückgeführt wird.

16. Verfahren nach Anspruch 15,
**dadurch gekennzeichnet,**
**dass** der Teilstrom (3') geregelt wird.

## Claims

1. Method for removing anionic trash from an aqueous pulp suspension (S) using an upright flotation vessel (4, 4') in which the pulp suspension (S) is dammed up at an accumulation height (H) above the bottom of the flotation vessel (4),
in which a stream of bubbles (2) which rises in the dammed-up pulp suspension (S) against the field of gravity is formed with the aid of gas bubbles (1),
the pulp suspension (S) being guided transversely to the stream of bubbles (2) and being carried off in cleaned form as accepted stock (S'), and
the anionic trash being attached to the gas bubbles (1) and then being carried off in a compressed flotation froth (3) together with the gas bubbles (1),
**characterised in that**
the flow cross-section of the flotation vessel (4, 4') lying transversely to the stream of bubbles (2) on at least one long side (5) is at least 80% rectilinear and that the length (L) of the long side (5) is at least 1.5 times, preferably at least 2 times, as great as the width (B) of the broad side (6).

2. A method according to Claim 1,
**characterised in that**
the length (L) is at least 3 times as great as the width (B).

3. A method according to Claim 1 or 2,
**characterised in that**
the flow cross-section is substantially rectangular.

4. A method according to Claim 1, 2 or 3,
**characterised in that**
the hydraulic diameter of the flow cross-section is no greater than 2.7 m.

5. A method according to Claim 1, 2, 3 or 4,
**characterised in that**
the pulp suspension (S) which is to undergo flotation is guided through the stream of bubbles (2) at least over part of its passage through the flotation vessel (4, 4').

6. A method according to one of the preceding claims,
**characterised in that**
the pulp suspension (S) is supplied to the flotation vessel (4, 4') uniformly distributed over at least 80% of the flow cross-section.

7. A method according to one of the preceding claims,
**characterised in that**
at least two flotation vessels (4, 4') of equal size are used, which contact each other on their long side (5), and that they are connected in parallel.

8. A method according to one of the preceding claims,
**characterised in that**
a flotation plant which consists predominantly of flotation vessels (4, 4') of equal size is used.

9. A method according to Claim 7 or 8,
**characterised in that**
the flotation vessels (4, 4') are designed to be open on the contacting long sides (5).

10. A method according to one of the preceding claims,
**characterised in that**
the pulp suspension (S) which is to undergo flotation is added laterally to the rising stream of bubbles (2).

11. A method according to one of the preceding claims,
**characterised in that**
the pulp suspension (S) which is to undergo flotation is added unaerated, and that aeration takes place beneath the addition point.

12. A method according to one of Claims 1 to 10,
**characterised in that**
the pulp suspension (S) which is to undergo flotation is added aerated, and that partial aeration takes place geodetically beneath the addition point.

13. A method according to one of the preceding claims,
**characterised in that**
the point at which the suspension is introduced into the flotation vessel (4, 4') is located geodetically above the extraction means for the accepted stock (S').

14. A method according to one of the preceding claims,
**characterised in that**
the amount of air supplied is adjustable.

15. A method according to one of the preceding claims,
**characterised in that**
a partial stream (3') of the flotation froth (3) is returned into the feed to the flotation vessel (4, 4').

16. A method according to Claim 15,
**characterised in that**
the partial stream (3') is regulated.

## Revendications

1. Procédé destiné à l'élimination d'impuretés d'une suspension aqueuse de matières fibreuses (S) avec utilisation d'un récipient de flottation (4, 4') positionné à la verticale, dans lequel la suspension de matières fibreuses (S) est accumulée à une hauteur d'accumulation (H) au-dessus du fond du récipient de flottation (4), dans lequel
un flux de bulles (2) ascendant orienté à l'opposé du champ de gravitation est engendré dans la suspension de matières fibreuses (S) accumulée, à l'aide de bulles de gaz (1),
la suspension de matières fibreuses (S) circule transversalement au flux de bulles (2), et est évacuée à l'état épuré en tant que pâte à papier acceptée (S'), et
les impuretés adhérent aux bulles de gaz (1), et sont évacuées ensuite avec les bulles de gaz (1) dans une mousse de flottation (3) compacte,
**caractérisé en ce que,**
sur au moins un côté longitudinal (5), la section transversale d'écoulement située transversalement au flux de bulles (2) du récipient de flottation (4, 4') est rectiligne, au moins à 80 %, et **en ce que** la longueur (L) du côté longitudinal (5) est au moins 1,5 fois, de préférence au moins 2 fois, égale à la largeur (B) du côté large (6).

2. Procédé selon la revendication 1,
**caractérisé en ce que**
la longueur (L) est au moins 3 fois égale à la largeur (B).

3. Procédé selon la revendication 1 ou 2,
**caractérise en ce que**
la section transversale d'écoulement est sensiblement rectangulaire.

4. Procédé selon la revendication 1, 2 ou 3,
**caractérisé en ce que**
le diamètre hydraulique de la section transversale d'écoulement n'est pas supérieur à 2,7 m.

5. Procédé selon la revendication 1, 2, 3 ou 4,
**caractérisé en ce que**
la suspension de matières fibreuses (S) à flotter passe à travers le flux de bulles (2), au moins sur une partie de son trajet dans le récipient de flottation (4, 4').

6. Procédé selon l'une des revendications précédentes,
**caractérisé en ce que**
la suspension de matières fibreuses (S) est amenée dans le récipient de flottation (4, 4') en étant répartie de façon homogène sur au moins 80 % de la section transversale d'écoulement.

7. Procédé selon l'une des revendications précédentes,
**caractérisé en ce que**
il est utilisé au moins deux récipients de flottation (4, 4') de même capacité, qui sont en contact entre eux par leurs côtés longitudinaux (5), et **en ce qu'**ils sont branchés en parallèle.

8. Procédé selon l'une des revendications précédentes,
**caractérisé en ce que**
il est utilisé une installation de flottation qui est en majeure partie constituée de récipients de flottation (4, 4') de même capacité.

9. Procédé selon la revendication 7 ou 8,
**caractérisé en ce que**
les récipients de flottation (4, 4') sont réalisés en étant ouverts au niveau des côtés longitudinaux (5) qui sont en contact entre eux.

10. Procédé selon l'une des revendications précédentes,
**caractérisé en ce que**
la suspension de matières fibreuses (S) à flotter est ajoutée latéralement dans le flux de bulles (2) ascendant.

11. Procédé selon l'une des revendications précédentes,
**caractérisé en ce que**
la suspension de matières fibreuses (S) à flotter est ajoutée à l'état non aéré, et **en ce qu'**une aération est effectuée sous le point d'admission,

12. Procédé selon l'une des revendications 1 à 10,
**caracterisé en ce que**
la suspension de matières fibreuses (S) à flotter est ajoutée à l'état aéré, et **en ce qu'**une aération partielle est effectuée du point de vue géodésique sous le point d'admission.

13. Procédé selon l'une des revendications précédentes,
**caractérisé en ce que**
l'emplacement au niveau duquel la suspension est introduite dans le récipient de flottation (4, 4') est situé du point de vue géodésique au-dessus du soutirage de la pâte à papier acceptée (S').

14. Procédé selon l'une des revendications précédentes,
**caractérisé en ce que**
la quantité de l'air admis est réglable.

15. Procédé selon l'une des revendications précédentes,
**caractérisé en ce que**
un flux partiel (3') de la mousse de flottation (3) est recyclé vers l'entrée du récipient de flottation (4, 4').

16. Procédé selon la revendication 15,
**caractérisé en ce que**
le flux partiel (3') est régulé.
